# EUROPÄISCHE PATENTSCHRIFT

(11) **EP 0 936 393 B1**
(45) Veröffentlichungstag und Bekanntmachung des Hinweises auf die Patenterteilung: **17.07.2002**
(21) Anmeldenummer: 99102176.7
(22) Anmeldetag: 04.02.1999
(51) Int. Cl.: F16L 33/08, F16L 33/02, F16L 21/08

(54) **Schellenanordnung**
Clamp arrangement
Disposition d'un collier de serrage

(30) Priorität: 16.02.1998 DE 19806235
(43) Veröffentlichungstag der Anmeldung: 18.08.1999
(73) Patentinhaber: Rasmussen GmbH, 63477 Maintal (DE)
(72) Erfinder: Mann, Stephan, 63599 Bieber (DE)
(74) Vertreter: Knoblauch, Andreas, Dr.-Ing.

(56) Entgegenhaltungen:
- DE-A- 19 533 553
- US-A- 3 303 669
- US-A- 5 195 788
- US-A- 5 630 255

## Beschreibung

Aus der österreichischen Patentschrift 0 203 921 B1 ist eine Schellenanordnung mit einer ein spannbares Schellenband aufweisenden Schelle und einem ringartig geformten Einsatzband, das sich in Umfangsrichtung erstreckende, einander überlappende Endabschnitte aufweist, bekannt. Sie dient als Schlauchschelle, mit der ein Schlauchende auf einem Rohr oder Rohrstutzen befestigt werden kann. Das Schellenband ist in Umfangsrichtung federnd ausgebildet, um ein selbsttätiges Nachspannen zu ermöglichen, wenn die Elastizität des Schlauchmaterials im Laufe der Zeit nachläßt.

Beim Spannen der Schlauchschelle wird der Durchmesser der Schelle vermindert, so daß das Schellenband eine radiale Kraft auf den Schlauch ausübt und ihn somit auf dem Rohr oder dem Rohrstutzen festklemmt. Die radiale Spannkraft muß hierbei so dimensioniert sein, daß sie einerseits anderen auf den Schlauch ausgeübten Kräften widerstehen kann. Andererseits darf sie auch nicht zu groß sein, damit der Schlauch bzw. der Rohrstutzen nicht beschädigt wird. Wenn der Schlauch beispielsweise in einem Kühlwasserkreislauf eines Verbrennungsmotors eingesetzt wird, muß die mit Hilfe der Schellenanordnung erzielte Befestigung so stabil und dicht sein, daß die in dem Kühlsystem auftretenden Drücke nicht zu einem Abheben des Schlauchs von dem Rohrstutzen führen. Wird umgekehrt ein derartiger Schlauch in einem Luftoder Ventilationssystem verwendet, dessen Rohrstutzen in einem Fahrzeug beispielsweise aus Gewichtsgründen aus einem leichteren Kunststoff gefertigt sind, dann darf die radiale Spannkraft nicht so groß sein, daß der Rohrstutzen beschädigt wird.

Man löst das Problem bislang dadurch, daß man die einzelnen Schlauchschellen mit unterschiedlichen, in Umfangsrichtung wirkenden Spannkräften (Umfangs-Spannkräften) befestigt. Die Umfangsspannkraft bestimmt weitgehend die radiale Spannkraft und wird beispsielsweise bei einer Schneckengewindeschelle durch das Drehmoment bestimmt, mit dem deren Spannschraube angezogen wird. Eine Umfangsspannkraft wird auch bei einer Rastnasenschelle oder anderen spannbaren Schellen ausgeübt.

In der Serienfertigung, beispielsweise in der Serienfertigung von Kraftfahrzeugen, bei der eine Vielzahl von spannbaren Schlauchschellen eingebaut werden muß, tritt nun das Problem auf, daß man zwar vielfach gleiche Schlauchschellen verwenden kann, um Schläuche an unterschiedlichen Positionen mit Rohrstutzen zu verbinden, daß man aber hierbei unterschiedliche Umfangsspannkräfte aufbringen muß, um die oben gestellten Forderungen zu erfüllen. Dies bedingt in der Regel einen Spannwerkzeugwechsel oder zumindest ein Umschalten eines Spannwerkzeugs, z.B. eines Drehmoment-Schlüssels bei einer Schneckengewindeschelle, auf unterschiedliche Umfangsspannkräfte, was die Handhabung erschwert. Vor allem ist der Wechsel aber ein Grund für Fehler, die zu unterschiedlichen radialen Spannkräften führen und somit entweder Beschädigungen nach sich ziehen oder Undichtigkeiten.

Der Erfindung liegt die Aufgabe zugrunde, bei einer vorgegebenen Umfangsspannkraft unterschiedliche kleinere, radiale Spannkräfte zu erzielen.

Die Lösung dieser Aufgabe besteht erfindungsgemäß in einem Schellenanordnungssatz mit einer Schelle , die ein spannbares Schellenband aufweist, das in Umfangsrichtung ungefedert ist, und mit mehreren ringförmigen, untereinander austauschbaren Einsatzbändern, die sich in Umfangsrichtung erstreckende, einander überlappende Endabschnitte und derart unterschiedliche Widerstände gegen eine in Umfangsrichtung erfolgende relative Verschiebung ihrer sich überlappenden Endabschnitte aufweisen, daß sich bei Ausübung einer vorbestimmten Spannkraft in Umfangsrichtung auf das Schellenband bei jedem jeweils verwendeten Einsatzband eine andere vorbestimmte radiale Spannkraft auf den eingespannten Gegenstand ergibt.

Wenn eine Schellenanordnung mit einem derartig Einsatzband gespannt wird, wobei der Durchmesser der Schelle vermindert wird, müssen die beiden Endabschnitte des Einsatzbandes immer weiter übereinandergeschoben werden, was mit zunehmender radialer Spannkraft eine immer größere Umfangsspannkraft erfordert. Wenn sich die radial wirkende Spannkraft erhöht, dann entsteht eine Reibung zumindest in dem Überlappungsbereich zwischen den beiden Endabschnitten des Einsatzbandes. Hinzu kommt eine Reibung zwischen dem radial außen liegenden Endabschnitt des Einsatzbandes und der Schelle sowie dem radial innen liegenden Endabschnitt des Einsatzbandes und dem Schlauch. Die Reibung zwischen den beiden Endabschnitten setzt der Durchmesserverringerung einen erhöhten Widerstand entgegen. Mit anderen Worten, es wird ein Teil der Umfangsspannkraft dazu verbraucht, die Reibungskraft zwischen den Endabschnitten zu überwinden. Dieser Teil der Umfangsspannkraft steht dann nicht mehr zur Verfügung, um die radiale Spannkraft aufzubauen. Man kann also bei gleicher Umfangsspannkraft durch Verwendung eines entsprechenden Einsatzbandes eine entsprechend verminderte radiale Spannkraft erzielen. Dies kann man beispielsweise dazu ausnutzen, an verschiedenen Einbaupositionen die gleiche Umfangsspannkraft zu verwenden und trotzdem unterschiedliche radiale Spannkräfte zu erzeugen, je nachdem, welches Einsatzband in der Schelle eingesetzt wird.

vorzugsweise ist das eine der Einsatzbänder radial nach außen vorgespannt, und es liegt von innen am Schellenband an. Damit kann man das Einsatzband in der Schelle vorpositionieren. Wenn es nach außen federt, ist es vor der Montage der Schellenanordnung auf dem Schlauch innerhalb der Schelle festgeklemmt. Damit wird automatisch auch der größtmögliche Innendurchmesser erreicht, was die Montage der Schellenanordnung auf dem Schlauch erleichtert. Wenn die Schelle dann gespannt wird, wird das Einsatzband zusammengezogen. Dies führt in Abhängigkeit vom für das Einsatzband verwendeten Material bereits zu einer kleineren oder größeren Gegenkraft, die ebenfalls über die Umfangsspannkräfte aufgebracht werden muß, so daß auch durch die Federwirkung des Einsatzbandes eine Verminderung der radialen Spannkraft auf den Schlauch erfolgen kann.

Vorzugsweise weist das eine der Einsatzbänder an seinen axialen Kanten jeweils eine Ausformung auf, die radial zumindest soweit nach außen vorsteht, daß sie mit dem Schellenband in Eingriff steht. Zusammen mit der Federcharakteristik des Einsatzbandes führt dies dazu, daß das Einsatzband praktisch unverlierbar innerhalb der Schelle gehalten ist. Auch beim Spannen der Schelle verhindert die Ausformung, daß das Einsatzband zwischen dem Schlauch und dem Schellenband axial herausgedrückt wird. Die Ausformung läßt sich einfach dadurch erreichen, daß die axialen Kanten des Einsatzbandes umgebogen werden. Hierdurch läßt sich auch eine relativ glatte oder abgerundete Kontur erreichen, so daß die Gefahr einer Beschädigung des Schlauches durch einschneidende Kanten geringer wird. Das Einsatzband kann, muß aber nicht, am Schellenband befestigt sein, beispielsweise durch einen Schweißpunkt.

Hierbei ist bevorzugt, daß der eine Endabschnitt des einen Einsatzbandes mit der Ausformung versehen ist und der andere Endabschnitt frei von der Ausformung ist, wobei der mit der Ausformung versehene Endabschnitt radial weiter innen liegt. Der radial weiter außen liegende Endabschnitt ist somit etwas schmaler als der radial weiter innen liegende Endabschnitt, so daß beim Übereinanderschieben die Ausformungen beider Endabschnitte nicht miteinander kollidieren können. Darüber hinaus verhindert die Ausformung am radial weiter innen liegenden Endabschnitt des Einsatzbandes, daß der radial weiter außen liegende Endabschnitt den Überlappungsbereich verläßt und etwa in Axialrichtung zwischen dem anderen Endabschnitt und dem Schellenband herausgeschoben wird. Auf diese Weise läßt sich die verringerte radiale Spannkraft durch die Reibung im Überlappungsbereich sehr zuverlässig aufrechterhalten.

Mit Vorteil ist die Ausbildung des Überlappungsbereichs der Endabschnitte an die zulässige radiale Spannkraft angepaßt. Beispielsweise läßt sich durch eine größere Ausdehnung des Überlappungsbereichs in Umfangsrichtung auch eine größere Verringerung der radialen Spannkraft bei gleicher Umfangsspannkraft erreichen. Je kleiner der Überlappungsbereich in Umfangsrichtung ist, desto kleiner wird auch die Spannkraftverminderung. Ferner lassen sich Ausgestaltungen realisieren, bei denen die Größe des Überlappungsbereiches auf andere Weise verändert wird, beispielsweise durch das Anordnen von Schlitzen oder Öffnungen in einem Endabschnitt des Einsatzbandes.

Vorzugsweise weist mindestens ein Endabschnitt im Überlappungsbereich eine reibungserhöhende Oberflächeneigenschaft und/oder Ausformung auf. Man kann beispielsweise einen Endabschnitt oder beide Endabschnitte des Einsatzbandes an ihren einander zugewandten Oberflächen aufrauhen, um den Reibungskoeffizienten beim Zusammenwirken der beiden Oberflächen zu erhöhen. Dies setzt dann dem Übereinanderschieben der beiden Endabschnitte einen größeren Widerstand entgegen, so daß die radiale Spannkraft bei gleicher Umfangsspannkraft weiter vermindert werden kann. Man kann auch eine Prägung vorsehen, so daß die Oberflächen noch "rauher" werden. Auch eine Rändelung ist denkbar. Die Behandlung der Oberfläche kann soweit gehen, daß sie relativ tief in das Material des Einsatzbandes eingreift und beispielsweise den Endabschnitt des Einsatzbandes umformt, so daß sich zwischen den beiden Endabschnitten des Einsatzbandes nahezu formschlüssige Eingriffsmöglichkeiten ergeben. Eine derartige Ausgestaltung kann sich auch mit zunehmender Überlappung ändern. Eine derartige "dynamische" Gestaltung kann beispielsweise dadurch realisiert werden, daß die Rauhigkeit mit zunehmender Überlappung zunimmt. Auch der Übergang zwischen der Eigenschaft einer ebenen Oberfläche und ihrer Ausformung ist fließend. Die Wahl, welche Möglichkeit man verwendet, richtet sich danach, welche radiale Spannkraftverminderung erwünscht ist.

Vorzugsweise ist ein Endabschnitt zumindest im Überlappungsbereich als Wellfeder ausgebildet. Eine derartige Wellfeder hat hier zwei Wirkungen. Zum einen wird die Reibung zwischen den beiden Endabschnitten des Einsatzbandes erhöht. Zum anderen verbleibt bei dieser Ausgestaltung nach dem Spannen der Schelle eine Federkraft, die zu einem laufenden Nachspannen der Schelle führt. Ein derartiges Nachspannen kann beispielsweise dann erforderlich sein, wenn das Material des Schlauchs und/oder des Rohrstutzens fließt, im Laufe der Zeit also zwischen der Schelle und dem Rohrstutzen herauswandert.

In einer bevorzugten Ausführungsform weist eines der Einsatzbänder radial nach innen vorstehende Laschen auf. Man kann dann das Einsatzband auch dazu verwenden, die Schellenanordnung auf dem Schlauch vorzupositionieren. Die Laschen müssen hierbei soweit nach innen ragen, daß sie die Schelle auf dem Schlauch abstützen können. Wenn der Schlauch in Position gebracht worden ist und die Schelle gespannt wird, werden die Laschen wieder nach außen gedrückt. Man wird die Laschen daher in der Regel so ausbilden, daß sie nicht senkrecht vom Einsatzband abstehen, sondern eine gewisse Neigung zu ihm haben. Die Form der Laschen oder Nasen kann sehr unterschiedlich sein. Es kann sich um einfache Rechtecke handeln, gegebenenfalls mit abgerundeten Spitzen. Die Laschen oder Nasen können aber auch U- oder V-förmig ausgebildet sein. Die Anzahl der Laschen richtet sich nach dem gewünschten Verwendungszweck.

Vorzugsweise sind die Laschen einstückig mit dem Einsatzband ausgebildet. Sie können beispielsweise durch einen Stanz-Biege-Vorgang erzeugt werden. Bei der Fertigung der Schellenanordnung müssen daher keine zusätzlichen Teile gehandhabt werden. Die Laschen können bei der späteren Handhabung nicht verlorengehen, indem sich die Verbindung zwischen den Laschen und dem Band löst.

Vorzugsweise sind die Laschen federnd ausgebildet. Dies erleichtert die Vorpositionierung der Schellenanordnung auf dem Schlauch. Letztendlich kann man auch hierdurch eine gewisse Nachspannwirkung erzielen.

Dies ist insbesondere dann der Fall, wenn mindestens eine Lasche als Wellfeder ausgebildet ist. Auch bei einer mit der notwendigen Umfangsspannkraft gespannten Schelle verbleibt eine Feder, nämlich die Wellfeder, zwischen dem Schlauch und dem Schellenband, so daß bei Ermüdungserscheinungen des Materials des Schlauches oder des Rohrs eine Nachspannung erfolgt.

Die Erfindung wird im folgenden anhand von bevorzugten Ausführungsbeispielen in Verbindung mit der Zeichnung näher beschrieben. Hierin zeigen:
- Fig. 1: eine perspektivische Darstellung einer Schellenanordnung mit einer Schneckengewindeschelle,
- Fig. 2: eine schematische Gegenüberstellung der Funktionen von Umfangsspannkraft in Form eines Anzugsmoments gegenüber der radialen Spannkraft bei einer herkömmlichen und bei einer neuen Schelle,
- Fig. 3 bis 6: verschiedene Ausbildungen eines Einsatzbandes und
- Fig. 7 und 8: verschiedene Ausbildungen von Überlappungsbereichen.

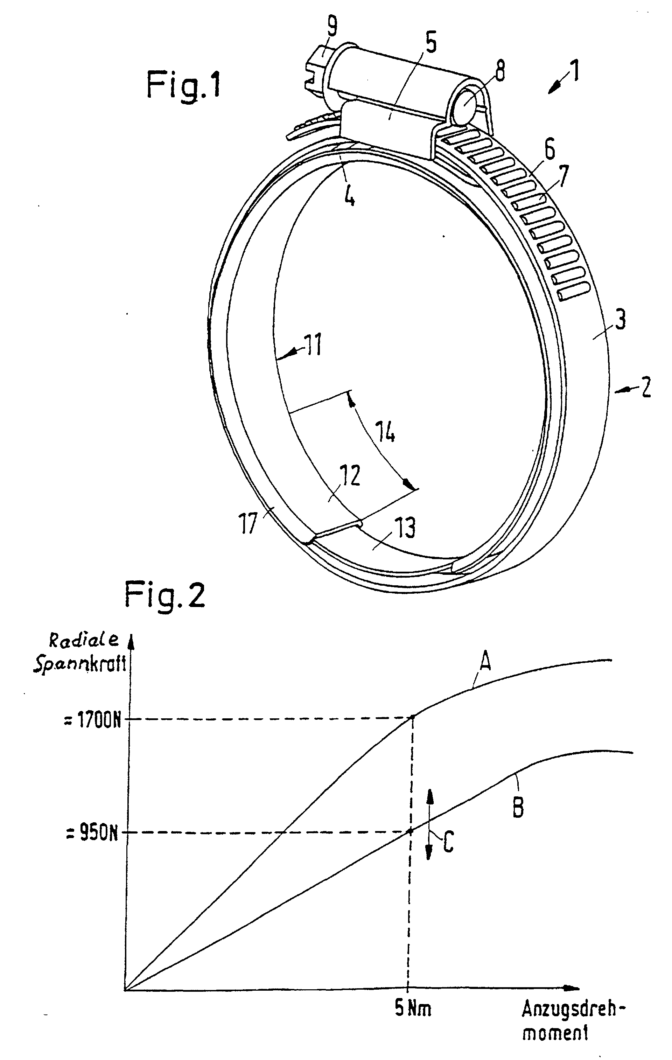

Eine in Fig. 1 dargestellte Schellenanordnung 1 weist eine Schneckengewindeschelle 2 mit einem ringförmig gebogenen Schellenband 3 auf. Ein Endabschnitt 4 des Schellenbandes 3 ist mit einem etwa tunnelförmigen Gehäuse 5 verbunden. Der andere Endabschnitt 6 des Schellenbandes 3 ist durch das Gehäuse 5 geführt und mit in das Schellenband 3 eingeprägten rippenartigen Gewindeabschnitten 7 versehen, die mit dem Gewinde einer in das Gehäuse 5 eingesetzten Spannschraube 8 zusammenwirken, um die Schelle 2 zu öffnen oder zu schließen, d.h. zu spannen. Die Spannschraube 8 weist einen Kopf 9 auf, an dem zum Spannen ein geeignetes Werkzeug mit einem vorbestimmten maximalen Drehmoment angreifen kann.

Die Erfindung ist aber auch bei anderen spannbaren Schellenarten anwendbar, beispielsweise Rastnasenschellen, Schellen mit Kniehebel-Spannverschluß oder Spannbackenschellen.

In Fig. 2 ist in einer Kurve A schematisch der Zusammenhang zwischen der radialen Spannkraft (vertikale Achse) und dem Anzugsdrehmoment (horizontale Achse) der Spannschraube 8 als Maß für die Umfangsspannkraft einer herkömmlichen Schneckengewindeschelle 2 dieser Art dargestellt. Bis zum Soll-Anzugsmoment von beispielsweise 5 Nm ergibt sich hierbei eine im wesentlichen lineare Zunahme der radialen Spannkraft, die dann beispielsweise etwa 1700 N erreicht. Eine weitere Erhöhung des Anzugsdrehmoments würde zu einer nichtlinearen Erhöhung der radialen Spannkraft führen, weil sich dann Verformungen der Schelle 2 ergeben können.

Die radiale Spannkraft wirkt auf einen nicht näher dargestellten Endabschnitt eines Schlauches, der auf einen ebenfalls nicht näher dargestellten Stutzen aufgeschoben ist und dort befestigt werden soll. Sowohl Schlauch als auch Stutzen müssen in der Lage sein, die radiale Spannkraft aufzunehmen, die mit dem Anzugsdrehmoment einhergeht. Wenn diese beiden Teile nicht in der Lage sind, die radiale Spannkraft aufzunehmen, muß das Anzugsdrehmoment entsprechend abgesenkt werden.

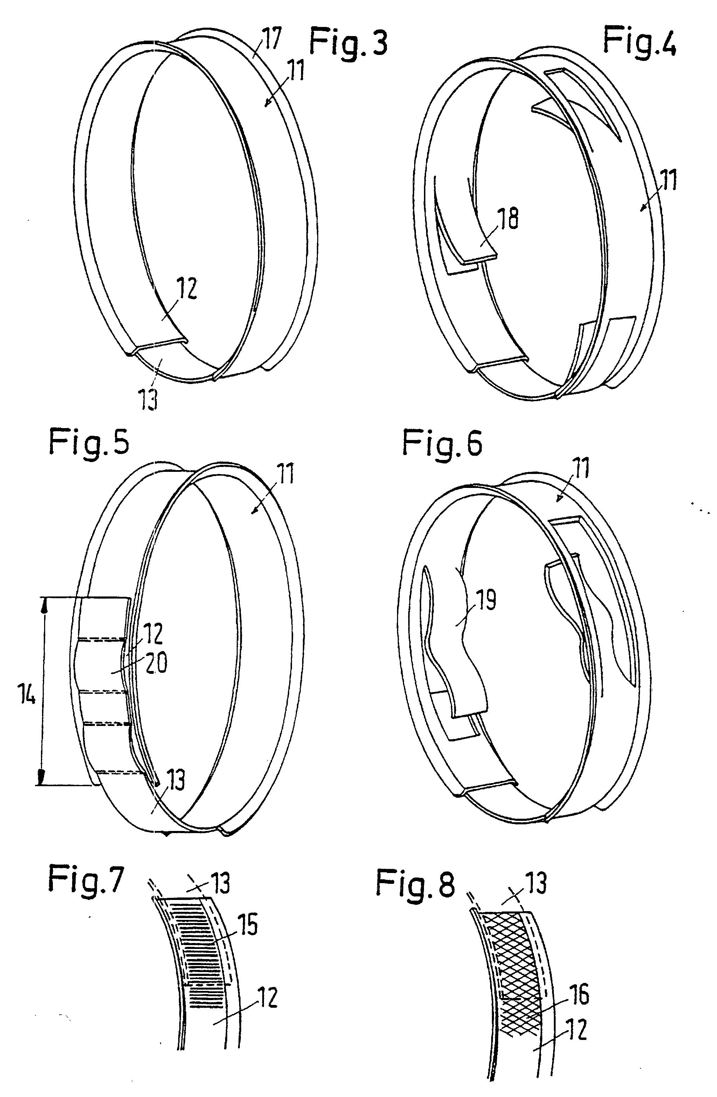

Bei der in Fig. 1 dargestellten Schellenanordnung 1 ist in dem Raum, der vom Schellenband 3 umgeben ist, ein in Fig. 3 separat dargestelltes, ringartig geformtes Einsatzband 11 ausgebildet, dessen Endabschnitte 12, 13 einander in Umfangsrichtung überlappen, d.h. die Länge des Einsatzbandes 11 ist größer als der Innenumfang der Schneckengewindeschelle 2. Die beiden Endabschnitte 12, 13 liegen also in einem Überlappungsbereich 14 radial aufeinander. Wenn die Schneckengewindeschelle 2 zusammen mit dem Einsatzband 11 auf einen Schlauch aufgeschoben wird, ergibt sich dadurch im Überlappungsbereich 14 radial von innen nach außen ein Aufbau: Schlauch - radial innerer Endabschnitt 12 des Einsatzbandes 11 - radial äußerer Endabschnitt 13 des Einsatzbandes 11 - Schellenband 3.

Wenn die Schneckengewindeschelle 2 gespannt wird, vermindert sich ihr Durchmesser, indem der Endabschnitt 6 des Schellenbandes 3 weiter durch das Gehäuse 5 gezogen wird. In gleicher Weise muß sich der Durchmesser des Einsatzbandes 11 vermindern, was dadurch möglich ist, daß sich die beiden Endabschnitte 12, 13 des Einsatzbandes 11 unter Vergrößerung des Überlappungsbereichs 14 weiter übereinanderschieben. Dies ist mit einer relativ geringen Kraft solange möglich, wie aufgrund der radial wirkenden Spannkräfte die beiden Endabschnitte 12, 13 noch nicht aufeinandergepreßt werden. Wenn die radial wirkenden Spannkräfte ansteigen, dann werden die beiden Endabschnitte 12, 13 zwischen dem Schellenband 3 und dem Schlauch radial zusammengedrückt. Im Überlappungsbereich entsteht dann eine Reibung, die zum weiteren Übereinanderschieben der beiden Endabschnitte 12, 13 überwunden werden muß. Die Reibungskraft steigt mit zunehmender Spannkraft an. Zu ihrer Überwindung, also zum weiteren Übereinanderschieben der beiden Endabschnitte 12, 13 des Einsatzbandes 11, ist dann ein immer größerer Anteil des Anzugsdrehmoments notwendig. Dieser "fehlende" Teil kann nicht mehr zum Aufbauen der radialen Spannkraft verwendet werden. Dementsprechend kann, obwohl die Schneckengewindeschelle 2 mit dem gleichen Anzugsdrehmoment gespannt wird, die radiale Spannkraft, die letztendlich vom Schellenband 3 auf den Schlauch und den Rohrstutzen ausgeübt wird, kleiner gehalten werden. Dies ist in Fig. 2 schematisch dargestellt. Anhand der Kurve B ist erkennbar, daß bei dem gleichen Anzugsdrehmoment eine wesentlich kleinere radiale Spannkraft auf den Schlauch ausgeübt wird.

Durch den Doppelpfeil C in Fig. 2 soll angedeutet werden, daß die Kurve B in gewissen Grenzen verschoben werden kann. Beispielsweise kann man durch eine Veränderung des Überlappungsbereichs 14 auch eine Veränderung der Steigung der Kurve B in ihrem Arbeitsbereich, d.h. bis zum Soll-Anzugsdrehmoment, erreichen. Wenn der Überlappungsbereich größer wird, dann ist die Reibung größer, so daß die Kurve B noch flacher wird. Wenn der Überlappungsbereich 14 kleiner wird, dann nähert sich die Kurve B der Kurve A weiter an. Es gibt jedoch eine Reihe von weiteren Möglichkeiten, um die Reibung zu erhöhen oder zu senken.

So zeigt beispielsweise Fig. 7, daß der Endabschnitt 12 an seiner radial äußeren Seite mit einer Rändelung oder einer anderen Oberflächenstruktur 15 versehen sein kann. Die Oberflächenstruktur 15 kann so stark ausgeprägt sein, daß ein nahezu formschlüssiger Eingriff der beiden Endabschnitte 12, 13 erfolgt.

In Fig. 8 ist dargestellt, daß die radial äußere Seite des Endabschnitts 12 mit einer Rauhigkeit 16 an der Oberfläche versehen ist, beispielsweise durch Anschleifen oder Sandstrahlen.

In den Fig. 7 und 8 ist der andere Endabschnitt 13 gestrichelt eingezeichnet, um die Lage der Rändelung bzw. Oberflächenstruktur 15 und der Oberflächeneigenschaft 16 zu verdeutlichen.

Wie aus den Fig. 1 und 3 erkennbar ist, ist das Einsatzband 11 an seinen Längskanten radial nach außen umgebogen. Die dadurch gebildete Ausformung 17 dient dazu, das Einsatzband 11 axial in der Schelle 2 zu halten. Da das Einsatzband 11 federt, liegt seine radiale äußere Seite an der radial inneren Seite des Schellenbandes 3 an. Hierdurch ergibt sich zwar schon eine gewisse Haltekraft. Durch die Ausformung 17 wird aber praktisch sichergestellt, daß das Einsatzband 11 unverlierbar in der Schelle gehalten ist. Es kann zwar, muß aber nicht, noch zusätzlich am Schellenband 3 befestigt sein.

Im Bereich des radial außen liegenden Endabschnitts 13 ist die Ausformung 17 nicht vorhanden. Dementsprechend kann der Endabschnitt 13 radial außen über den Endabschnitt 12 geschoben werden, ohne von der Ausformung 17, die einen Rand bildet, behindert zu werden.

Darüber hinaus verhindert die Ausformung 17 auch noch, daß der Endabschnitt 13 seitlich, d.h. in Axialrichtung, von dem Endabschnitt 12 freikommt, auch wenn der Druck ansteigt. Dementsprechend kann die radiale Spannkraft immer vermindert werden, ohne daß die beiden Endabschnitte 12, 13 ihre Ausrichtung zueinander aufgeben.

Aus Fig. 4 ist ersichtlich, daß das Einsatzband 11 radial nach innen vorstehende Laschen 18 aufweist, die aus dem Einsatzband 11 herausgestanzt und herausgebogen sind. Die Laschen 18, die auch als Nasen bezeichnet werden können, sind also einstückig mit dem Einsatzband 11 verbunden. Sie können, wie dargestellt, die Form eines Rechtecks aufweisen. Andere Formen sind denkbar. Auch ist man nicht auf die drei dargestellten Laschen 18 beschränkt, sondern man kann auch mehr Laschen verwenden.

Die Laschen 18 dienen dazu, die Schelle auf einem Schlauch vorzupositionieren. Hierzu müssen die Laschen 18 weit genug radial nach innen ausgebogen worden sein, um auf der Außenseite des nicht näher dargestellten Schlauches aufzusitzen. Wenn dann die Schelle gespannt wird, werden die Laschen 18 wieder nach außen gebogen und fügen sich dann gegebenenfalls wieder in das Einsatzband 11 ein.

Fig. 6 zeigt eine abgewandelte Ausführungsform, bei der anstelle der Laschen 18 Wellfedern 19 aus dem Band 11 herausgebogen sind. Die Wellfedern können nicht mehr vollständig in das Einsatzband 11 zurückgebogen werden, wenn die Schelle gespannt wird. Es verbleibt dann ein Federdruck auf den Schlauch, der zu einem laufenden Nachspannen der Schelle führt.

Fig. 5 zeigt eine weitere Ausführungsform, bei der eine Wellfeder 20 am Ende 13 des Einsatzbandes 11 angeordnet ist. Diese Wellfeder 20 kann drei Funktionen haben. Zum einen erhöht sie die Reibung im Überlappungsbereich 14 zwischen den beiden Endabschnitten 12, 13. Zum anderen kann sie den Endabschnitt 12 im ungespannten Zustand der Schelle soweit nach innen biegen, daß er auf der Umfangsfläche des Schlauches aufsitzt und somit auch zu einer Vorpositionierung der Schelle auf dem Schlauchende verwendet werden kann. Schließlich führt sie im gespannten Zustand zu einem laufenden Nachspannen.

Das Einsatzband 11 wird vorzugsweise aus einem federnden Blech gebildet. Es kann aber auch aus einem Kunststoff hergestellt sein.

Mit Hilfe unterschiedlicher Einsatzbänder ist es möglich, bei dem gleichen Anzugsdrehmoment unterschiedliche radiale Spannkräfte zu erreichen. Man kann auch die gleichen Schellen für unterschiedliche Zwecke verwenden. Hierzu ist es lediglich notwendig, die Einsatzbänder 11 auszutauschen. Gegebenenfalls kann man die Einsatzbänder 11 noch farblich markieren, um auch für wenig geschulte Montagekräfte die Unterscheidung zu ermöglichen.

## Patentansprüche

1. Schellenanordnungssatz mit einer Schelle (2), die ein spannbares Schellenband (3) aufweist, das in Umfangsrichtung ungefedert ist, und mit mehreren ringförmigen, untereinander austauschbaren Einsatzbändern (11), die sich in Umfangsrichtung erstrekkende, einander überlappende Endabschnitte (12, 13) und derart unterschiedliche Widerstände gegen eine in Umfangsrichtung erfolgende relative Verschiebung ihrer sich überlappenden Endabschnitte (12, 13) aufweisen, daß sich bei Ausübung einer vorbestimmten Spannkraft in Umfangsrichtung auf das Schellenband (3) bei jedem jeweils verwendeten Einsatzband (11) eine andere vorbestimmte radiale Spannkraft auf den eingespannten Gegenstand ergibt.

2. Schellenanordnungssatz nach Anspruch 1, **dadurch gekennzeichnet, daß** eines der Einsatzbänder (11) radial nach außen vorgespannt ist und von innen am Schellenband (3) anliegt.

3. Schellenanordnungssatz nach Anspruch 1 oder 2, **dadurch gekennzeichnet, daß** eines der Einsatzbänder (11) an seinen axialen Kanten jeweils eine Ausformung (17) aufweist, die radial zumindest soweit nach außen vorsteht, daß sie mit dem Schellenband (3) in Eingriff steht.

4. Schellenanordnungssatz nach Anspruch 3, **dadurch gekennzeichnet, daß** der eine Endabschnitt (12) des einen Einsatzbandes (11) mit der Ausformung (17) versehen ist und der andere Endabschnitt (13) frei von der Ausformung (17) ist, wobei der mit der Ausformung (17) versehene Endabschnitt (12) radial weiter innen liegt.

5. Schellenanordnungssatz nach einem der Ansprüche 1 bis 4, **dadurch gekennzeichnet, daß** die Ausbildung des Überlappungsbereichs (14) der Endabschnitte (12, 13) an die zulässige radiale Spannkraft angepaßt ist.

6. Schellenanordnungssatz nach einem der Ansprüche 1 bis 5, **dadurch gekennzeichnet, daß** mindestens ein Endabschnitt (12) im Überlappungsbereich (14) eine reibungserhöhende Oberflächeneigenschaft (16) und/oder Ausformung (15) aufweist.

7. Schellenanordnungssatz nach einem der Ansprüche 1 bis 6, **dadurch gekennzeichnet, daß** ein Endabschnitt (13) zumindest im Überlappungsbereich (14) als Wellfeder (20) ausgebildet ist.

8. Schellenanordnungssatz nach einem der Ansprüche 1 bis 7, **dadurch gekennzeichnet, daß** eines der Einsatzbänder (11) radial nach innen vorstehende Laschen (18) aufweist.

9. Schellenanordnungssatz nach Anspruch 8, **dadurch gekennzeichnet, daß** die Laschen (18) einstückig mit dem Einsatzband (11) ausgebildet sind.

10. Schellenanordnungssatz nach Anspruch 8 oder 9, **dadurch gekennzeichnet, daß** die Laschen (18) federnd ausgebildet sind.

11. Schellenanordnungssatz nach Anspruch 10, **dadurch gekennzeichnet, daß** mindestens eine Lasche als Wellfeder (19) ausgebildet ist.

## Claims

1. A clip arrangement set comprising a clip (2) having a tightenable clip band (3) which is unsprung in the peripheral direction, and a plurality of annular insert bands (11) which are interchangeable with each other and which extend in the peripheral direction and which overlap each other and which have such different resistances to relative displacement in the peripheral direction of their mutually overlapping end portions (12, 13) that when a predetermined tightening force is applied in the peripheral direction to the clip band (3) each insert band (11) which is being respectively used affords a different predetermined radial tightening force on the article being gripped.

2. A clip arrangement set according to claim 1 **characterised in that** one of the insert bands (11) is biased radially outwardly and bears from the inside against the clip band (3).

3. A clip arrangement set according to claim 1 or claim 2 **characterised in that** at its axial edges one of the insert bands (11) has a respective outwardly shaped portion (17) which projects radially outwardly at least to such an extent that it is in engagement with the clip band (3).

4. A clip arrangement set according to claim 1 **characterised in that** the one end portion (12) of the one insert band (11) is provided with the outwardly shaped portion (17) and the other end portion (13) is free of the outwardly shaped portion (17), wherein the end portion (12) with the outwardly shaped portion (7) is radially further inwardly.

5. A clip arrangement set according to one of claims 1 to 4 **characterised in that** the configuration of the overlap region (14) of the end portions (12, 13) is adapted to the permissible radial tightening force.

6. A clip arrangement set according to one of claims 1 to 5 **characterised in that** at least one end portion (12) has in the overlap region (14) a friction-increasing surface property (16) and/or shaped configuration (15).

7. A clip arrangement set according to one of claims 1 to 6 **characterised in that** at least in the overlap region (14) an end portion (13) is in the form of a corrugated spring (20).

8. A clip arrangement set according to one of claims 1 to 7 **characterised in that** one of the insert bands (11) has radially inwardly projecting bar portions (18).

9. A clip arrangement set according to claim 8 **characterised in that** the bar portions (18) are formed in one piece with the insert band (11).

10. A clip arrangement set according to claim 8 or claim 9 **characterised in that** the bar portions (18) are resilient.

11. A clip arrangement set according to claim 10 **characterised in that** at least one bar portion is in the form of a corrugated spring (19).

## Revendications

1. Agencement de collier de serrage comprenant un collier de serrage (2), qui présente une bande serrable (3) qui n'est pas chargée à ressort dans la direction périphérique, et plusieurs bandes d'insertion (11) annulaires, échangeables entre elles, qui présentent des sections d'extrémité (12, 13) s'étendant dans la direction périphérique et se recouvrant l'une l'autre et des résistances différentes vis-à-vis d'un déplacement relatif dans la direction périphérique de leurs sections d'extrémité qui se recouvrent (12, 13), de façon que, lors d'un exercice d'une force de serrage prédéterminée dans la direction périphérique sur la bande (3), on obtienne pour chaque bande d'insertion respectivement utilisée (11) une autre force de serrage radiale prédéterminée sur l'objet enserré.

2. Agencement de collier de serrage suivant la revendication 1, **caractérisé en ce qu'**une des bandes d'insertion (11) est précontrainte radialement vers l'extérieur et est en appui de l'intérieur sur la bande (3) du collier de serrage.

3. Agencement de collier de serrage suivant l'une des revendications 1 et 2, **caractérisé en ce qu'**une des bandes d'insertion (11) présente à ses bords axiaux respectivement une déformation (17) qui fait saillie radialement vers l'extérieur au moins dans une mesure suffisante pour qu'elle vienne en prise avec la bande (3) du collier de serrage.

4. Agencement de collier de serrage suivant la revendication 3, **caractérisé en ce que** l'une des sections d'extrémité (12) de l'une des bandes d'insertion (11) est pourvue de la déformation (17) et **en ce que** l'autre section d'extrémité (13) est exempte de la déformation (17), la section d'extrémité (12) pourvue de la déformation (17) se trouvant radialement davantage vers l'intérieur.

5. Agencement de collier de serrage suivant l'une des revendications 1 à 4, **caractérisé en ce que** la forme de réalisation de la zone de recouvrement (14) des sections d'extrémité (12, 13) est adaptée à la force de serrage radiale admissible.

6. Agencement de collier de serrage suivant l'une des revendications 1 à 5, **caractérisé en ce qu'**au moins une section d'extrémité (12) présente dans la zone de recouvrement (14) une propriété de surface (16) et/ou une déformation (15) qui augmente le frottement.

7. Agencement de collier de serrage suivant l'une des revendications 1 à 6, **caractérisé en ce qu'**une section d'extrémité (13) est réalisée, au moins dans la zone de recouvrement (14), sous la forme d'un ressort ondulé (20).

8. Agencement de collier de serrage suivant l'une des revendications 1 à 7, **caractérisé en ce qu'**une des bandes d'insertion (11) présente des languettes (18) qui font saillie radialement vers l'intérieur.

9. Agencement de collier de serrage suivant la revendication 8, **caractérisé en ce que** les languettes (18) sont réalisées d'une pièce avec la bande d'insertion (11).

10. Agencement de collier de serrage suivant l'une des revendications 8 et 9, **caractérisé en ce que** les languettes (18) sont réalisées élastiques.

11. Agencement de collier de serrage suivant la revendication 10, **caractérisé en ce qu'**au moins une languette est réalisée sous la forme d'un ressort ondulé (19).
